# EUROPEAN PATENT SPECIFICATION

(11) **EP 3 744 422 B1**
(45) Date of publication and mention of the grant of the patent: **19.07.2023**
(21) Application number: 20176840.5
(22) Date of filing: 27.05.2020
(51) Int. Cl.: G05D 1/00, F16N 1/00

(54) **A DEVICE FOR MIXING A COOLANT AND A LUBRICANT**
VORRICHTUNG ZUM VERMISCHEN EINES KÜHLMITTELS MIT EINEM SCHMIERMITTEL
DISPOSITIF POUR MÉLANGER UN RÉFRIGÉRANT ET UN LUBRIFIANT

(30) Priority: 27.05.2019 LU 101232
(43) Date of publication of application: 02.12.2020
(73) Proprietor: Univerza v Ljubljani, 1000 Ljubljana (SI)
(72) Inventor: Franci, Pusavec, 4290 Trzic (SI); Sterle, Luka, 1381 Rakek (SI); Grguras, Damir, 1000 Ljubljana (SI)
(74) Representative: Zacco GmbH

(56) References cited:
- WO-A1-2016/184936
- US-A1- 2016 151 871

## Description

The invention concerns a device and a method for mixing a coolant and a lubricant.

Such devices are known from WO2016/184936. The reference shows a system for mixing a chemical product with water. It comprises a main chamber in which there can move a piston delimiting an upstream part of the main chamber fluidically connected to the water inlet port and a downstream part of the main chamber connected to the chemical product inlet port, the piston being equipped with a rod extending into the downstream part of the main chamber. The water inlet port is also connected to the mixture outlet port, the downstream part of the main chamber is also connected to the mixture outlet port. A water flow rate regulating device is interposed between the upstream part of the main chamber and the water inlet port. The piston is able to move, in the main chamber, under the action of the incoming water entering the upstream part of the main chamber and of the difference in pressure created by the rod of the piston in the downstream part of the main chamber so that chemical product contained in the downstream part of the main chamber is directed toward the mixture outlet port.

Another reference with a different system is shown in US2016/0151871.

In machining processes, due to the nature of the respective process, cutting tools can be subjected to large mechanical and thermal loads. Due to these loads, tool wear can occur through abrasive, adhesive, diffusion, chemical and/or fatigue wear mechanisms. Successful reduction of mechanical and thermal loads leads to prolonged tool life.

For counteracting those loads, oil-based emulsions and cutting oils are usually used in a principle called flooded cooling. From ecological, economical and medical point of view this principle is not sustainable and different alternatives are emerging as a replacement.

Minimum Quantity Lubrication (MQL) is a technique where atomized oil droplets are delivered to the cutting tool using pressurized gas as a carrier medium, creating so-called oil-based aerosol. This principle provides good lubrication, but lacks cooling effects.

Cryogenic mediums such as liquid nitrogen (LN₂) and liquid carbon dioxide (LCO₂) provide cooling of the machine tool, but are in essence dry, with no lubrication capabilities. When MQL and cryogenic mediums are combined, the advantages of both techniques would be necessary in the machining processes, especially when hard-to-machine materials are considered such as Ti, Ni alloys, etc.

Also, flooded cooling is becoming inadequate to provide sufficient cooling and lubrication in terms of modern requirements. The current stage of technique is covering different solutions of MQL and cryogenic fluid deliveries to the machine tool and further cutting zone. Individual systems are available on the market which deliver the cryogenic mediums and oil based aerosols to the machine tool.

It is an underlying object of the invention to provide a device for mixing a coolant and a lubricant for the use in industrial processes. It is further an object of the invention to provide a method for mixing a coolant and a lubricant.

The object underlying the invention is satisfied by the features of the independent claims. Advantageous further developments and aspects of the invention are set forth in the dependent claims.

In a first aspect of the instant application a device for mixing a coolant and a lubricant is provided. The device comprises several components, which are described in more detail below, and may also be denoted as a system.

The device comprises an inlet port, a pressure amplifier and a mixing unit.

The coolant is received at the inlet port. The inlet port is connected to a coolant supply. The device may contain one or more inlet ports for receiving the coolant.

The pressure amplifier, in particular an inlet of the pressure amplifier, is coupled to the inlet port and is configured to increase the pressure of the lubricant by means of the pressure of the coolant received at the inlet. The lubricant may be contained in the pressure amplifier. Alternatively, the lubricant may be contained in another component of the device.

The phrase "coupled to" means that the pressure amplifier is in fluid communication with the inlet port. Thus, when coolant is delivered to the inlet port, at least a portion of the coolant delivered to the inlet port can flow to the pressure amplifier. It is possible that other components of the device, such as one or more valves, a coolant flow separating unit and/or a coolant pressure regulator, are arranged in the coolant delivery circuit between the inlet port and the pressure amplifier.

The mixing unit is coupled to the inlet port and the pressure amplifier. The mixing unit is in fluid communication with the inlet port and is configured to mix a portion of the coolant provided at the inlet port with the lubricant provided by the pressure amplifier. The phrase "provided by the pressure amplifier" means that the lubricant is provided by the pressure on the lubricant, which pressure is provided by the pressure amplifier. In one embodiment, the lubricant may be contained in the pressure amplifier. An outlet of the pressure amplifier may be in fluid communication with the mixing unit. In another embodiment, the lubricant is not contained in the pressure amplifier, but in another component of the device. The pressure amplifier may apply pressure on the lubricant contained in the component and the component may be in fluid communication with the mixing unit.

The coolant may be any suitable type of gas or liquid, for example, liquid or supercritical carbon dioxide, liquid nitrogen, gaseous carbon dioxide, gaseous nitrogen, air or argon. The coolant may be pressurized above atmospheric pressure for delivery to the inlet port. The pressure amplifier is used to raise the pressure of the lubricant above the pressure of the coolant, thus allowing the lubricant to be injected into the stream of coolant in the mixing unit. Hence, the pressure energy of the coolant is used to pressurize the lubricant via the pressure amplifier, and the resulting higher-pressured lubricant is injected into the stream of coolant flowing through the mixing unit. The coolant is used as a transport fluid for the lubricant.

The lubricant may be any suitable type of fluid or suspension of fluid and solid particles, for example, oil or a solid lubricant suspension.

Pre-mixing the coolant and lubricant allows the single-channel delivery of the two substances to an outlet port of the device, which can be connected to a machining tool. This concept of pre-mixing the coolant and lubricant allows for simultaneous cooling and lubrication, drastically lower device energy consumption, precise adjustment of both coolant and lubricant flows and overall reduced device complexity. It also gives the possibility to measure the lubricant consumption in real time. In addition, pre-mixing of the coolant and lubricant improves the process performances leading to prolonged tool life and final product performances, such as the integrity of the machined surface. Single-channel delivery also offers the possibility to be used with small milling and drilling tools, for example, having diameters smaller than 3 mm.

The mix of coolant and lubricant provided by the device at the outlet port can be used in any suitable industrial process, for example, in machining processes such as milling, turning, drilling and grinding.

The inlet port may be connected to a main coolant supply channel of the device. An inlet valve, which can be an on/off valve, may be arranged in the main coolant supply channel. The inlet valve allows to interrupt the supply of coolant to the device.

In one embodiment, the device comprises a coolant flow separating unit, which is in fluid communication with the inlet port and is arranged at the outlet of the main coolant supply channel. The coolant flows from the inlet port through the main coolant supply channel to an inlet of the coolant flow separating unit. The coolant flow separating unit divides the coolant flows into two coolant delivery circuits, a first coolant delivery circuit and a second coolant delivery circuit. The coolant flow separating unit may be a T-joint or any other suitable fitting allowing dividing the coolant stream into two streams.

The first or main coolant delivery circuit is connected to a first outlet of the coolant flow separating unit and is used to supply the coolant to the desired industrial process. The main portion of the coolant supplied to the inlet port flows through the first coolant delivery circuit. Further, the first coolant delivery circuit comprises the mixing unit where the lubricant is injected into the stream of coolant. The first outlet of the coolant flow separating unit is thus in fluid communication with the mixing unit. In one embodiment, a coolant flow valve is arranged in the first coolant delivery circuit and is coupled between the first outlet of the coolant flow separating unit and the mixing unit. The coolant flow valve may be a proportional needle valve. Further, the control flow valve may be controlled by a control unit that is discussed further below.

The second coolant delivery circuit is connected to a second outlet of the coolant flow separating unit and is used to supply the coolant to the pressure amplifier. The second outlet of the coolant flow separating unit is thus in fluid communication with the pressure amplifier.

In other words, the first and second outlets of the coolant flow separating unit are coupled to the mixing unit and the pressure amplifier, respectively.

The pressure of the coolant in the second coolant delivery circuit may be reduced by a coolant pressure regulator, for example, a coolant pressure adjustment valve, that is arranged in the second coolant delivery circuit, i.e., is coupled between the second outlet of the coolant flow separating unit and the pressure amplifier.

The delivery of the coolant to the pressure amplifier can be carried out with or without the coolant pressure regulator, according to the lubrication requirements. The advantage of the coolant pressure regulator is to reduce the coolant pressure in the pressure amplifier, therefore having a lower pressure difference between coolant and lubricant, allowing for more precise control over the flow of the lubricant into the stream of coolant.

The pressure amplifier may comprise a low pressure chamber and a high pressure chamber. The low pressure chamber is connected to the second coolant delivery circuit and is thus in fluid communication with the inlet port so that the low pressure chamber is filled with a portion of the coolant that is provided at the inlet port. The high pressure chamber is configured to contain the lubricant and is in fluid communication with the mixing unit. The pressure of the lubricant contained in the high pressure chamber is increased by the pressure of the coolant contained in the low pressure chamber.

The pressure amplifier may comprise a hydraulic cylinder. For example, the pressure amplifier may comprise a piston contained in a cylinder, wherein the piston separates the low pressure chamber from the high pressure chamber. Since the piston inside the cylinder is movable, the pressure of the coolant in the low pressure chamber can increase the pressure of the lubricant in the high pressure chamber via the piston.

The surfaces of the piston facing to the low pressure chamber and the high pressure chamber, respectively, may be different. In one embodiment, a first surface area of the piston that is in contact with the low pressure chamber is larger than a second surface area of the piston that is in contact with the high pressure chamber. The second surface area may be reduced compared to the first surface area by a piston rod that is rigidly attached to the surface of the piston facing the high pressure chamber.

The pressure on each side of the piston varies in the same ratio as their areas. The pressure is inversely proportional to the area of the piston. The inlet of the pressure amplifier connected to the outlet of the second coolant delivery circuit allows the flow of the pressurized coolant to the low pressure chamber. The coolant pressure acts on the piston, thus creating a force. As the piston area is larger on the low pressure side and smaller on the high pressure side of the pressure amplifier, this difference in piston area creates the higher pressure of the lubricant on the high pressure side of the piston. The coolant on the low pressure side and the lubricant on the high pressure side of the cylinder do not mix, as the chambers are separated, e.g., by a piston with seals.

The amplification ratio is the quotient between the piston area on the low pressure side, i.e., the first surface area, and the piston area on the high pressure side, i.e., the second surface area. The amplification ratio is therefore component dependent and can be freely adjusted by selecting the desired hydraulic amplifier. The value of the amplification ratio is usually above 1. The pressure of the coolant multiplied by the amplification ratio returns the pressure of the lubricant. Therefore, the pressure of the lubricant depends on the amplification ratio and on the pressure of the coolant. With a fixed amplification ratio the pressure of the lubricant can be reduced using the coolant pressure regulator if needed.

Due to the high pressure of the lubricant in the high pressure chamber of the pressure amplifier, a part of the lubricant is pressed out of the high pressure chamber and flows via a lubricant delivery circuit to the mixing unit where the lubricant is injected into the coolant flowing through the first coolant delivery circuit. As the lubricant is injected into the stream of coolant, the piston is moving. The volumetric flow rate of the lubricant is directly proportional to the linear velocity of the piston. Thus, using this principle the precise measurement of the flow rate of the lubricant is possible. In one embodiment, a displacement sensor measures the displacement of the piston.

The velocity of the piston may be measured by measuring the displacement of the piston rod, moving outside the cylinder. To measure the displacement, any kind of displacement sensor can be used, such as optical sensor, linear variable differential transformer (LVDT) or any other sensor that permits position measurement. The total displaced volume is dependent on the piston stroke and the piston area on the high pressure side of the pressure amplifier. The piston stroke and the piston area on the high pressure piston side are also dependent on the selection of the desired hydraulic amplifier.

The lubricant is injected into the stream of coolant in small quantities. Flow rates from 1 ml/hour upwards can be measured. The flow rate of the lubricant into the stream of the coolant may be adjusted using a lubricant flow valve arranged in the lubricant delivery circuit and coupled between the pressure amplifier and the mixing unit. The lubricant flow valve may be a proportional needle valve. The flows of the coolant and the lubricant can be individually controlled by means of the coolant and lubricant flow valves.

The maximum lubricant flow in the lubricant delivery circuit is not limited to a specific value. This is important in case a specific application requires a high flow rate of the lubricant, i.e., a rich mixture of coolant and lubricant. The high pressure chamber for the lubricant in the pressure amplifier should be able to contain enough lubricant for a longer uninterrupted use at a desired lubricant flow rate. Pressure amplifiers with the same amplification ratio may contain different amounts of lubricant. The end user should find the most suitable solution for his own needs. The lubricant fluid may be any type of liquid or mixture of liquid and solid particles. The advantage of this invention compared to the use of hydraulic pumps for lubricant injection is the ability of using wider variety of liquids as lubricants, e.g., water, alcohol, etc.

The ability to combine different coolants and lubricants using the same device can be beneficial for flexibility in several very common industrial processes. The usage of the device is hence beneficial for a wide array of companies and manufacturing facilities across the industrial world. In addition, the same device may be used for multiple different kind of processes, which makes the device very cost efficient for industrial use.

Another advantage of the device according to the first aspect of the application compared to the currently available MQL and cryogenic systems is the low energy consumption. The main source of the necessary energy for the operation is the pressure energy of the coolant. By using the concept of the invention, the device can provide mixing of coolant and lubricant without additional electric energy as the coolant flow valve, the lubricant flow valve, the coolant pressure regulator and the inlet valve can be operated manually. However, for more precise control over the flow rates and operational stages, for example, on/off state and/or mixture rate, the coolant flow valve, the lubricant flow valve and/or the inlet valve may be controlled through a control unit.

According to the invention, the control unit is at least coupled to the displacement sensor and the lubricant flow valve. The control unit receives data or signals containing information on the displacement of the piston from the displacement sensor. The displacement sensor may, for example, measure the change of the piston rod displacement over time. Alternatively, the displacement sensor may measure the current piston rod displacement and the control unit calculates the change of the piston rod displacement over time from the measurements of the displacement sensor. The control unit may further calculate the lubricant consumption from the change of the piston rod displacement over time and may use this to control the lubricant flow valve. The control unit may also display the lubricant consumption. The flow of the lubricant for the minimum quantity lubrication can be precisely measured by the displacement sensor.

Using a closed loop control system, the control unit can adjust the flow rate of the lubricant automatically. The control unit also allows the programmable communication with the machine tool, so that the flow parameters of coolant and lubricant can be controlled through a set of commands on the machine tool control panel and can be embedded into the NC code.

The flows of both coolant and lubricant are controlled via the coolant and the lubricant flow valves, which may be embodied as proportional needle valves. The coolant flow proportional valve is located on the main coolant delivery circuit, i.e., the first coolant delivery circuit. The lubricant flow proportional valve is located on the lubricant delivery circuit arranged between the pressure amplifier and the mixing unit. The inner diameters of the supplying lines used for the coolant and lubricant delivery circuits as well as the main coolant/lubricant supplying line should be chosen based on the desired flow rates of both coolant and lubricant. Dimensions of the supplying lines connected to the outlets of the proportional needle valves should be chosen based on the type, pressure and desired flow of both coolant and lubricant as well as the needle valve orifice size.

The supplying lines for the coolant and lubricant are connected on one side to the outlets of the coolant/lubricant flow valves and to the inlets of the mixing unit on the other side. The mixing unit may be any kind of device which allows the mixing/coupling of two separate fluid flows into one two-phase flow, wherein the fluids may be both liquid, both gaseous or one liquid and one gaseous. In addition, one of the fluids may contain solid particles, for example, a suspension of solid particles in a carrier liquid medium for improved lubrication. The main coolant and lubricant supplying line for supplying the mixture of coolant and lubricant to the machining process is connected to the outlet of the mixing unit. The supplying line of the first coolant delivery circuit connecting the mixing unit with the coolant flow valve and the main coolant and lubricant supplying line may have the same inner diameter or a similar diameter. The main coolant and lubricant supplying line can be attached to suitable tool holders or machine tool spindles which allow through-tool delivery of coolant and lubricant mixture or it can be used as an exit nozzle for providing the coolant and lubricant mixture to the process.

In one embodiment, the device may include a lubricant delivery circuit that is arranged between the high pressure chamber of the pressure amplifier and the mixing unit. The lubricant delivery circuit is configured to deliver the lubricant from the high pressure chamber to the mixing unit. Further, a first on/off valve may be coupled to the lubricant delivery circuit. During a filling regime, i.e., when the high pressure chamber is to be filled with liquid lubricant, the first on/off valve may be opened to couple the high pressure chamber to a source of lubricant.

Optionally, the device may include a second on/off valve that is arranged in the lubricant delivery circuit and is configured to be closed during the filling regime in order to decouple the high pressure chamber from the mixing unit.

Optionally, the device may include a third on/off valve that is coupled to the low pressure chamber and is configured to be open during the filling regime in order to de-pressurize the low pressure chamber.

The control unit may activate the refilling of the high pressure chamber based on information from the displacement sensor. For example, the control unit may activate the refilling when the displacement sensor indicates that the piston of the pressure amplifier has reached the piston end position.

Further, during the filling regime the inlet valve may be closed by the control unit in order to prevent coolant leakage from the third on/off valve, which is open during the filling regime.

The lubricant may be a liquid or a mixture of solid particles and a liquid carrier medium. If such a mixture of solid particles and liquid carrier medium is injected into the high pressure chamber of the pressure amplifier, a number of technical difficulties may occur which prevent the mixing of the coolant and the lubricant.

Firstly, a mixture of solid particles and liquid carrier medium may be instable in such a way that the solid particles sediment to the bottom of the high pressure chamber of the pressure amplifier. Due to the sedimentation process, only the liquid carrier medium, which may not have lubrication properties, may be injected into the coolant. Furthermore, the solid particles may be unable to fully evacuate the high pressure chamber, which may yield a non-ideal mixture of solid particles and liquid carrier medium at the next refill of the high pressure chamber.

Secondly, the solid particles may agglomerate at the lubricant flow valve, resulting in poor regulation properties or even total obstruction.

In one embodiment, the device comprises a lubricant cylinder, which may be separated from the pressure amplifier, but may be in fluid communication with the pressure amplifier. The lubricant cylinder is configured to contain the lubricant, whereas the pressure amplifier may not contain lubricant in this embodiment. The lubricant cylinder may have a lubricant chamber that contains the lubricant and is coupled to the mixing unit, i.e., the lubricant chamber is in fluid communication with the mixing unit.

The lubricant may be a mixture of solid particles and a liquid carrier medium.

The pressure amplifier may be coupled to the lubricant cylinder in order to increase the pressure of the lubricant. Thus, the flow rate of the lubricant flowing from the lubricant chamber to the mixing unit can be controlled by the pressure amplifier.

A lubricant delivery supply line may connect an outlet of the lubricant chamber to the mixing unit. The lubricant delivery supply line may be free of obstacles that could be prevent a flow of the lubricant containing solid particles. In particular, the lubricant delivery supply line may couple the outlet of the lubricant chamber directly to the mixing unit. No additional components, such as a lubricant flow valve, may be contained within the lubricant delivery supply line.

The lubricant cylinder may further comprise a liquid chamber and a piston. The liquid chamber may be coupled to the pressure amplifier and may be configured to contain a liquid, in particular a homogeneous liquid medium. The pressure amplifier may apply a pressure to the liquid in order to indirectly control the flow rate of the lubricant from the lubricant chamber to the mixing unit. The piston may separate the liquid chamber from the lubricant chamber. Since the piston inside the lubricant cylinder is movable, the pressure of the liquid in the liquid chamber can increase the pressure of the lubricant in the lubricant chamber via the piston. The liquid in the liquid chamber and the lubricant in the lubricant chamber do not mix, as the chambers are separated, e.g., by a piston with seals.

The lubricant cylinder may be a rodless cylinder, i.e., may not contain a piston rod. Further, a first surface area of the piston that is in contact with the liquid chamber may be equal to a second surface area of the piston that is in contact with the lubricant chamber. Thus, the amplification factor of the lubricant cylinder equals one so that the flow rate of the liquid entering the liquid chamber is the same as the flow rate of the lubricant leaving the lubricant chamber.

A lubricant mixing unit may be arranged in the lubricant chamber. The lubricant mixing unit may force the mixing of the solid particles and the liquid carrier medium inside the lubricant chamber. The lubricant mixing unit may be a propeller, which may be driven by an electric motor. The lubricant mixing unit may be controlled by the control unit based on characteristics of the lubricant, e.g., the size and/or type of the solid particles contained in the liquid carrier medium and/or the type of the liquid carrier medium. Further, the lubricant mixing unit may be switched on by the control unit only during pre-determined time intervals. For example, if the characteristics of the lubricant require more mixing, the time intervals for mixing may be longer and/or the pauses between successive time intervals for mixing may be shorter.

The pressure amplifier comprises a low pressure chamber coupled to the inlet port and a high pressure chamber configured to contain the liquid and coupled to the liquid chamber. In particular, an outlet of the high pressure chamber may be in fluid communication with the liquid chamber of the lubricant cylinder.

A liquid flow regulating delivery circuit may couple the outlet of the high pressure chamber to the inlet of the liquid chamber of the lubricant cylinder. The flow rate of the liquid may be adjusted using a liquid flow regulating flow valve arranged in the liquid flow regulating delivery circuit. The liquid flow regulating flow valve may be a proportional needle valve. The flows of the coolant and the lubricant may be individually controlled by means of the coolant flow valve and the liquid flow regulating flow valve.

The pressure amplifier comprises a piston contained in a cylinder, wherein the piston separates the low pressure chamber from the high pressure chamber. Since the piston inside the cylinder is movable, the pressure of the coolant in the low pressure chamber can increase the pressure of the liquid in the high pressure chamber via the piston.

The surfaces of the piston facing to the low pressure chamber and the high pressure chamber, respectively, may be different. A first surface area of the piston that is in contact with the low pressure chamber may be larger than a second surface area of the piston that is in contact with the high pressure chamber. The second surface area may be reduced compared to the first surface area by a piston rod that is rigidly attached to the surface of the piston facing the high pressure chamber.

The pressure on each side of the piston varies in the same ratio as their areas. The pressure is inversely proportional to the area of the piston. The inlet of the pressure amplifier connected to the outlet of the second coolant delivery circuit allows the flow of the pressurized coolant to the low pressure chamber. The coolant pressure acts on the piston, thus creating a force. As the piston area is larger on the low pressure side and smaller on the high pressure side of the pressure amplifier, this difference in piston area creates the higher pressure of the liquid on the high pressure side of the piston. The coolant on the low pressure side and the liquid on the high pressure side of the cylinder do not mix, as the chambers are separated, e.g., by a piston with seals.

A displacement sensor measures the displacement of the piston in the pressure amplifier.

According to the invention, the liquid flow regulating flow valve is controlled by a control unit. In addition, the control unit may control the inlet valve, the coolant flow valve and/or the electric motor driving the propeller installed in the lubricant chamber.

The control unit is at least coupled to the displacement sensor and the liquid flow regulating flow valve. The control unit may receive data or signals containing information on the displacement of the piston from the displacement sensor. The displacement sensor may, for example, measure the change of the piston rod displacement over time. Alternatively, the displacement sensor may measure the current piston rod displacement and the control unit may calculate the change of the piston rod displacement over time from the measurements of the displacement sensor. The control unit may further calculate the lubricant consumption from the change of the piston rod displacement over time and may use this to control the liquid flow regulating flow valve. The control unit may also display the lubricant consumption. The flow of the lubricant for the minimum quantity lubrication can be precisely measured by the displacement sensor.

Using a closed loop control system, the control unit may adjust the flow rate of the lubricant automatically. The control unit also allows the programmable communication with the machine tool, so that the flow parameters of coolant and lubricant may be controlled through a set of commands on the machine tool control panel and may be embedded into the NC code.

According to a second aspect of the application, a machine comprises a device for mixing a coolant and a lubricant as described above. The machine may, for example, be used for milling, turning, drilling, grinding and/or other industrial processes. Further, the machine may comprise at least one cutting tool and/or at least one other tool and/or at least one tool-holder, wherein the coolant and lubricant mixture provided by the device for mixing coolant and lubricant is delivered to the at least one cutting tool, the at least other tool and/or the at least one tool-holder.

According to a third aspect of the application, which does not fall under the scope of the claims, a method for mixing a coolant and a lubricant comprises the following steps:
- providing the coolant and the lubricant,
- increasing the pressure of the lubricant by means of the pressure of the coolant, and
- mixing at least a portion of the coolant and at least a portion of the lubricant with the increased pressure.

The method may be carried out by using the device according to the first aspect of the application.

The method may comprise the embodiments disclosed above in connection with the device according to the first aspect of the application.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures. There are shown in the drawings:
- Fig. 1: a schematic representation of an exemplary embodiment of a device for mixing a coolant and a lubricant;
- Fig. 2: a schematic representation of a further exemplary embodiment of a device for mixing a coolant and a lubricant; and
- Fig. 3: a schematic representation of yet a further exemplary embodiment of a device for mixing a coolant and a lubricant.

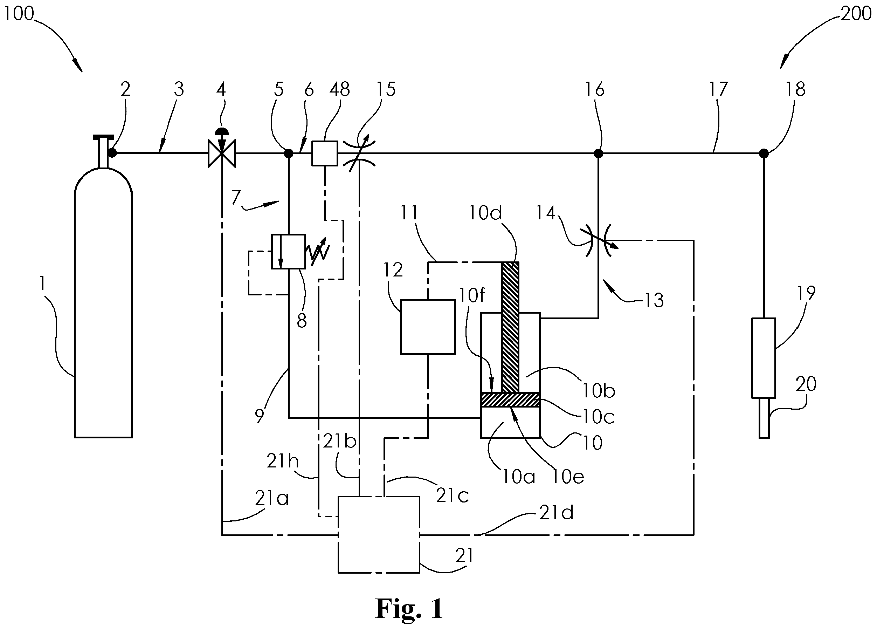

Fig. 1 of the drawings illustrates a schematic representation of a device 100 for mixing a coolant and a lubricant. The device 100 is an embodiment of a device according to the first aspect of the application. The device 100 is integrated into a machine 200 according to the second aspect of the application and can be used to perform a method according to the third aspect of the application.

The drawings should not be considered drawn to scale as some features may be exaggerated in order to more clearly illustrate the invention.

The coolant is provided as compressed coolant contained in a suitable reservoir 1, for example, a gas cylinder. The coolant may be liquid or gaseous CO₂, liquid or gaseous N₂ or Ar, but use of other liquids or gases may also be possible. CO₂ is in liquid state at 22 °C and 60 bar and cools down to -78.5 °C upon expansion from the nozzle, where the pressure is reduced to atmospheric pressure. Liquid nitrogen LN₂ is usually delivered in liquid state at a pressure range of 4 to 30 bar and a temperature of -200 °C. In pure form, LN₂ has limited lubricating properties. To provide lubrication and avoid the freezing of the oil, suspensions of carrier fluid and solid lubricants, for example, graphite, MoS₂, WS₂, can be injected into the stream of LN₂. Nitrogen or argon can be also used in gaseous phase to provide inert atmosphere during the machining process.

The reservoir 1 with the compressed coolant is connected to an inlet port 2 of a main coolant supply channel 3. The main coolant supply channel 3 may be vacuum insulated in the case of using cryogenic coolant to prevent heat losses.

An inlet valve 4 is arranged in the main coolant supply channel 3. The inlet valve 4 is an on/off valve and opens and closes the flow of the coolant when needed. The inlet valve 4 may be a manual or solenoid valve. The inlet valve 4 may be connected to a control unit 21 via a signal line 21a.

Downstream of the inlet valve 4 the main coolant supply channel 3 is connected to an inlet of a coolant flow separating unit 5. The coolant flow separating unit 5 may be a T-joint or any other fitting which allows one portion of the coolant to be directed to a pressure amplifier 10. The coolant flow separating unit 5 has a first outlet and a second outlet.

A first main coolant delivery circuit 6 is connected to the first outlet of the coolant flow separating unit 5. The coolant flow separating unit 5 directs the main flow of the coolant to the delivery line of the first main coolant circuit 6, while a small portion of the coolant flow is directed to a delivery line of a second coolant delivery circuit 7 connected to the second outlet of the coolant flow separating unit 5. The coolant in the second coolant delivery circuit 7 is used to establish the pressure in the pressure amplifier 10. The coolant consumption in the second coolant delivery circuit 7 is negligible. The ratio between the flow of the coolant and the flow of the lubricant may be in average in the range from 1:100 to 5:100, wherein these values are empirical values for common machining processes. The lubricant/coolant flow ratios can be freely adjusted by selecting the desired flow rates.

The pressure of the coolant in the second coolant delivery circuit 7 is reduced by a coolant pressure regulator 8 that is arranged downstream of the second outlet of the coolant flow separating unit 5. Smaller pressure differences between the coolant and lubricant are used for small lubricant flow rates in the MQL range. The small pressure differences can allow for small flow rates from 1 ml/hour upwards. The second coolant delivery circuit 7 delivers the coolant with reduced pressure from the coolant pressure regulator 8 to a low pressure chamber 10a of the pressure amplifier 10 via a supplying line 9 of the second coolant delivery circuit 7.

The pressure amplifier 10 further includes a high pressure chamber 10b, a piston 10c contained in a cylinder and a piston rod 10d attached to the piston 10c. The low pressure chamber 10a is filled with the coolant supplied by the second coolant delivery circuit 7, while the high pressure chamber 10b is filled with the lubricant. A first surface 10e of the piston 10c is in contact with the low pressure chamber 10a and a second surface 10f of the piston 10c is in contact with the high pressure chamber 10b. The area of the first surface 10e is larger than the area of the second surface 10f. The reduced surface area of the second surface 10f is due to the presence of the piston rod 10d attached to the second surface 10f of the piston 10c. Due to this piston area difference a pressure difference occurs and the lubricant in the high pressure chamber 10b is at higher pressure compared to the coolant in the low pressure chamber 10a.

The high pressure chamber 10b can be filled with various types of lubricants such as oils, alcohols, water based emulsions etc., which is an advantage of the device 100 over those devices that use hydraulic pumps which are mostly fluid limited.

As the piston 10c moves, the lubricant is being forced out of the high pressure chamber 10b into a lubricant delivery circuit 13. The piston movement is directly connected to the flow rate of the lubricant. The flow rate can be calculated by knowing the displaced volume of the smallest measureable movement of the piston 10c and the linear velocity by which it is moving. The piston 10c is rigidly connected to the piston rod 10d, which may extend out of the high pressure chamber 10b. The linear movement of the piston rod 10d is measured by a suitable displacement sensor 12. In case the displacement sensor 12 needs to be connected to the piston rod 10d, a rigid connection 11 is necessary. This can be the case with LVDT (Linear Variable Differential Transformer) displacement sensors. Other noncontact displacement sensors can also be used, for example, optical or capacitive sensors and other sensors.

The displacement sensor 12 may be connected via a signal line 21c to the control unit 21. The control unit 21 may calculate the lubricant consumption from the data received from the displacement sensor 12 in real time. The control unit 21 is further connected to a lubricant flow valve 14 arranged in the lubricant delivery circuit 13 via a signal line 21d and adjusts the lubricant flow to a predetermined value. The lubricant flow valve 14 may be a needle proportional valve.

The lubricant flow valve 14 limits the flow of the lubricant while maintaining its pressure above the pressure of the coolant. The size of the proportional valve, i.e., the orifice size when fully opened, is based on the required flow rates of the lubricant and the type of the lubricant.

The lubricant delivery circuit 13 delivers the lubricant from the high pressure chamber 10b to a mixing unit 16. The mixing unit 16 has two inlets. One of the inlets is connected to the outlet of the first coolant delivery circuit 6 and the other inlet is connected to the outlet of the lubricant delivery circuit 13.

A coolant flow valve 15 is arranged in the first coolant delivery circuit 6. The coolant flow valve 15 may be connected to the control unit 21 via a signal line 21b.

A flow meter sensor 48 is arranged upstream of the coolant flow valve 15 in the first coolant delivery circuit 6. The control unit 21 receives a signal with information regarding the coolant flow from the flow meter sensor 48 via a signal line 21h and can adjust the coolant flow valve 15 accordingly.

The sizes of the lubricant and coolant flow valves 14, 15 and the end delivery lines of the first coolant delivery circuit 6 and the lubricant delivery circuit 13 depend on coolant and lubricant properties and desired flow rates of both.

The mixing unit 16 may be a T-coupler.

The outlet of the mixing unit 16 is connected to a mixture supplying line 17. The mixture supply line 17 has an outlet port 18, which forms the outlet port of the device 100 where the mixed coolant and lubricant are provided.

The machine 200 includes the device 100, a tool holder or rotary union 19 and a tool 20. The tool holder or rotary union 19 is connected to the outlet port 18 of the device 100 and feeds the mixture of the coolant and lubricant internally through the tool 20.

The outlet port 18 of the device 100 can also be used to deliver coolant and lubricant to the process externally, which is not shown in Fig. 1.

The device 100 can be easily connected to tool holders, rotary unions or other systems which allows the delivery of the coolant and lubricant to a cutting tool or another tool. The implementation of the single-channel delivery is less complicated and much more economically feasible compared to existent devices which pipe the coolant and lubricant through two separate channels.

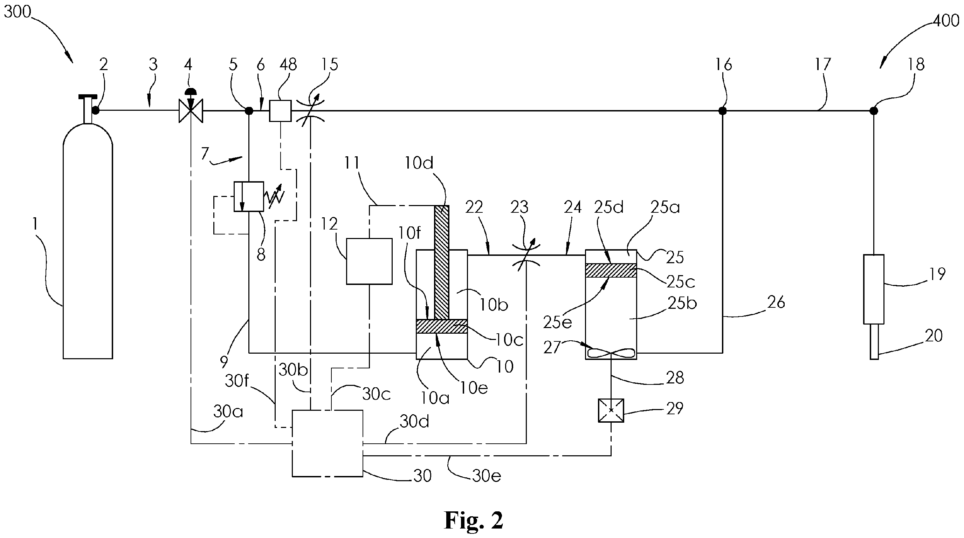

Fig. 2 illustrates a schematic representation of a device 300 for mixing a coolant and a lubricant. The device 300 is an embodiment of a device according to the first aspect of the application. The device 300 is integrated into a machine 400 according to the second aspect of the application and can be used to perform a method according to the third aspect of the application.

Some components and functions of the device 300 and the machine 400 are similar or identical to components and functions of the device 100 and the machine 200, respectively. In the following only the differences between the devices 100 and 300 as well as the machines 200 and 400 are described.

As explained above, in the device 100 shown in Fig. 1 the high pressure chamber 10b of the pressure amplifier 10 is filled with the lubricant and the lubricant delivery circuit 13 delivers the lubricant from the high pressure chamber 10b to the mixing unit 16. If the lubricant is a mixture of solid particles and a liquid carrier medium, several technical difficulties as mentioned above may arise if the lubricant is contained in the pressure amplifier 10. The device 300 shown in Fig. 2 overcomes these technical difficulties.

In the device 300 the high pressure chamber 10b of the pressure amplifier 10 contains a desired homogeneous liquid, which will be used to indirectly control the flow rate of the lubricant, which consists of a mixture of solid particles and a liquid carrier medium. As the homogeneous liquid is pressurized in the high pressure chamber 10b, it is delivered via a liquid flow regulating delivery circuit 22 to a liquid flow regulating flow valve 23. The liquid flow regulating flow valve 23 controls the flow rate of the liquid. A liquid flow regulated supply line 24 couples an outlet of the liquid flow regulating flow valve 23 to a rodless lubricant cylinder 25.

The lubricant cylinder 25 includes a liquid chamber 25a filled with liquid, a lubricant chamber 25b filled with the lubricant and a piston 25c separating the liquid chamber 25a from the lubricant chamber 25c. The outlet of the liquid flow regulated supply line 24 is connected to an inlet of the liquid chamber 25a. A lubricant delivery supply line 26 connects an outlet of the lubricant chamber 25b to the mixing unit 16. Further, the area of a first surface 25d of the piston 25c facing the liquid chamber 25a is equal to the area of a second surface 25e of the piston 25c facing the lubricant chamber 25b.

The main purpose of the rodless lubricant cylinder 25 is to transfer the pressure and the flow rate of the homogeneous liquid, originating from the pressure amplifier 10 and the liquid flow regulating flow valve 23. Since the first and second surfaces 25d, 25e of the piston 25c are identical in size, the amplification factor of the lubricant cylinder 25 equals one and the volumetric flow rate of the homogeneous liquid entering the flow regulated pressurized liquid chamber 25a is the same as the volumetric flow rate of the mixture of solid particles and liquid carrier medium exiting the flow regulated pressurized lubricant chamber 25b. A closed circuit between the cylinder of the pressure amplifier 10 and the lubricant cylinder 25 allows the measurement of this volumetric flow rate via the displacement sensor 12 with the rigid connection 11 to the piston rod 10d of the pressure amplifier 10.

The volumetric flow rate of the liquid exiting the high pressure chamber 10b is controlled by the liquid flow regulating flow valve 23. Flow rate adjusted high pressure liquid enters the liquid chamber 25a via the liquid flow regulated supply line 24 and the pressure and flow rate are transferred to the suspension of solid particles and liquid carrier medium in the lubricant chamber 25b via the piston 25c, which separates the two chambers.

The suspension mixture in the lubricant chamber 25b undergoes a mixing procedure when necessary using a high pressure lubricant mixing unit 27, which may be any kind of propeller. The lubricant mixing unit 27 is connected via a shaft 28 to an electric motor 29. The lubricant mixing unit 27 is used to prevent sedimentation of the solid particles to the bottom of the rodless lubricant cylinder 25 and keep the suspension of solid particles in the liquid carrier medium as homogeneous as possible. This suspension is furthermore fed via the lubricant delivery supply line 26 to the mixing unit 16. The lubricant delivery supply line 26 should be obstacle-free in greatest extent possible in order to prevent agglomeration of solid particles and possible obstruction.

A control unit 30 is used to control the inlet valve 4, the coolant flow valve 15, the liquid flow regulating flow valve 23 and the electric motor 29.

The inlet valve 4 is connected to the control unit 30 via a signal line 30a. The coolant flow valve 15 is connected to the control unit 30 via a signal line 30b. The displacement sensor 12 is connected to the control unit 30 via a signal line 30c. The liquid flow regulating flow valve 23 is connected to the control unit 30 via a signal line 30d. The electric motor 29 is connected to the control unit 30 via a signal line 30e. The flow meter sensor 48 is connected to the control unit 30 via a signal line 30f.

The control unit 30 receives data from the displacement sensor 12 and can calculate the lubricant consumption from these data in real time. The control unit 30 can control the liquid flow regulating flow valve 23 in order to adapt the lubricant flow rate to the mixing unit 16 to a desired flow rate.

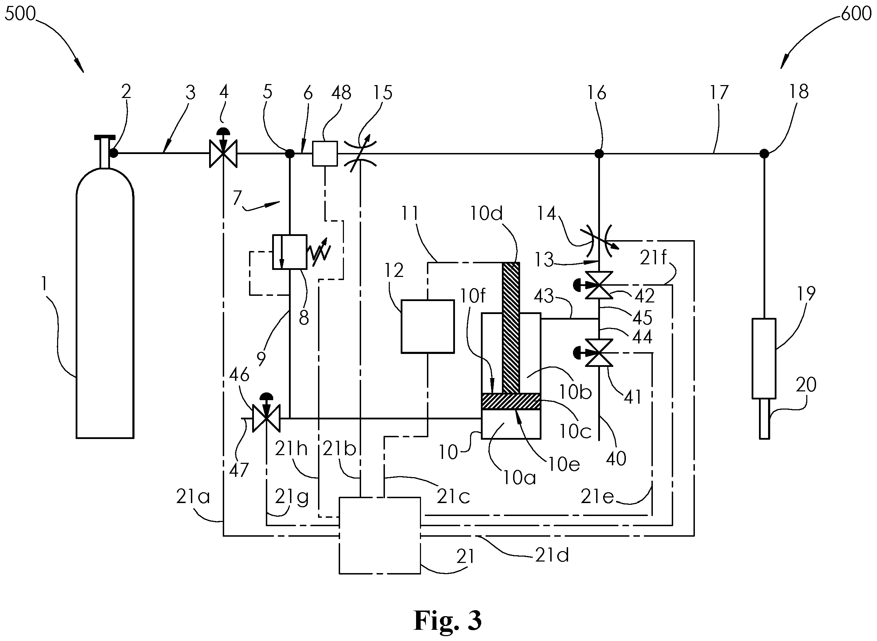

Fig. 3 illustrates a schematic representation of a device 500 for mixing a coolant and a lubricant. The device 500 is an embodiment of a device according to the first aspect of the application. The device 500 is integrated into a machine 600 according to the second aspect of the application and can be used to perform a method according to the third aspect of the application.

Some components and functions of the device 500 and the machine 600 are similar or identical to components and functions of the device 100 and the machine 200, respectively. In the following only the differences between the devices 100 and 500 as well as the machines 200 and 600 are described.

The device 500 shown in Fig. 3 has an arrangement to allow the high pressure chamber 10b of the pressure amplifier 10 to be filled with lubricant during a filling regime.

A source 40 of liquid lubricant, which is pressurized over atmospheric pressure, is connected to an on/off valve 41, which is coupled to the lubricant delivery circuit 13. Further, an on/off valve 42 is arranged in the lubricant delivery circuit 13. A supply line 43 connects the outlet of the high pressure chamber 10b to supply lines 44 and 45, wherein the supply line 44 is connected to the on/off valve 41 and the supply line 45 is connected to the on/off valve 42. Further, the on/off valves 41, 42 are controlled by the control unit 21 through signal lines 21e and 21f, respectively.

In addition, a line 47 may be coupled via an on/off valve 46 to the supply line 9 and thus to the low pressure chamber 10a of the pressure amplifier 10. The on/off valve 46 is controlled by the control unit 21 through a signal line 21g.

Under a normal operating regime of the device 500, the on/off valve 41 is closed and the on/off valve 42 is opened by the control unit 21. This ensures normal lubricant flow from the high pressure chamber 10b through the supply lines 43 and 45, the on/off valve 42 and the lubricant flow valve 14 and to the mixing unit 16.

Further, under the normal operating regime of the device 500, the on/off valve 46 is closed by the control unit 21.

Under the filling regime, the control unit 21 closes the on/off valve 42 and opens the on/off valves 41 and 46, to allow the flow of the pressurized lubricant from the source 40 through the supply lines 44 and 43 into the high pressure chamber 10b.

The on/off valve 46 is opened to de-pressurize the low pressure chamber 10a and to release the coolant through the line 47 into the desired surroundings.

When the high pressure chamber 10b has been filled, the normal operating regime resumes.

### LIST OF REFERENCE NUMERALS

- 1: reservoir
- 2: inlet port
- 3: main coolant supply channel
- 4: inlet valve
- 5: coolant flow separating unit
- 6: first coolant delivery circuit
- 7: second coolant delivery circuit
- 8: coolant pressure regulator
- 9: supplying line
- 10: pressure amplifier
- 10a: low pressure chamber
- 10b: high pressure chamber
- 10c: piston
- 10d: piston rod
- 10e: first surface
- 10f: second surface
- 11: rigid connection
- 12: displacement sensor
- 13: lubricant delivery circuit
- 14: lubricant flow valve
- 15: coolant flow valve
- 16: mixing unit
- 17: mixture supplying line
- 18: outlet port
- 19: tool holder or rotary union
- 20: tool
- 21: control unit
- 21a: signal line
- 21b: signal line
- 21c: signal line
- 21d: signal line
- 21e: signal line
- 21f: signal line
- 21g: signal line
- 21h: signal line
- 22: liquid flow regulating delivery circuit
- 23: liquid flow regulating flow valve
- 24: liquid flow regulated supply line
- 25: lubricant cylinder
- 25a: liquid chamber
- 25b: lubricant chamber
- 25c: piston
- 25d: first surface
- 25e: second surface
- 26: lubricant delivery supply line
- 27: high pressure lubricant mixing unit
- 28: shaft
- 29: electric motor
- 30: control unit
- 30a: signal line
- 30b: signal line
- 30c: signal line
- 30d: signal line
- 30e: signal line
- 30f: signal line
- 40: source
- 41: on/off valve
- 42: on/off valve
- 43: supply line
- 44: supply line
- 45: supply line
- 46: on/off valve
- 47: line
- 48: flow meter sensor
- 100: device
- 200: machine
- 300: device
- 400: machine
- 500: device
- 600: machine

## Claims

1. A device (100, 300, 500) for mixing a coolant and a lubricant, the device (100, 300, 500) comprising:
an inlet port (2) for receiving the coolant,
a pressure amplifier (10) coupled to the inlet port (2) and configured to increase the pressure of the lubricant by means of the pressure of the coolant;
a mixing unit (16) coupled to the inlet port (2) and the pressure amplifier (10) and configured to mix the coolant and the lubricant provided by the pressure amplifier (10);
wherein said pressure amplifier (10) comprises a low pressure chamber (10a) coupled to the inlet port (2) and a high pressure chamber (10b) configured to contain the lubricant and coupled to the mixing unit (16), and a piston (10c) contained in a cylinder, wherein the piston (10c) separates the low pressure chamber (10a) from the high pressure chamber (10b);
a lubricant flow valve (14) arranged between the pressure amplifier (10) and the mixing unit (16),
a displacement sensor (12) configured to measure the displacement of the piston (10c); and
a control unit (21) configured to receive data on the displacement of the piston (10c) from the displacement sensor (12) and to control the lubricant flow valve (14) using the data on the displacement of the piston (10c).

2. The device (100, 300, 500) as claimed in claim 1, further comprising a coolant flow separating unit (5), wherein the coolant flow separating unit (5) comprises an inlet coupled to the inlet port (2), a first outlet coupled to the mixing unit (16) and a second outlet coupled to the pressure amplifier (10).

3. The device (100, 300, 500) as claimed in claim 2, further comprising a coolant pressure regulator (8) arranged between the second outlet of the coolant flow separating unit (5) and the pressure amplifier (10), and/or
further comprising a coolant flow valve (15) arranged between the first outlet of the coolant flow separating unit (5) and the mixing unit (16).

4. The device (100, 500) as claimed in one of the claims 1 to 3 wherein a first surface area (10e) of the piston (10c) that is in contact with the low pressure chamber (10a) is larger than a second surface area (10f) of the piston (10c) that is in contact with the high pressure chamber (10b).

5. The device (500) as claimed in one of the claims 1 to 4,
further comprising a lubricant delivery circuit (13) configured to deliver the lubricant from the high pressure chamber (10b) to the mixing unit (16),
further comprising a first on/off valve (41) coupled to the lubricant delivery circuit (13) and configured to couple the high pressure chamber (10b) to a source (40) of lubricant during a filling regime when lubricant is filled into the high pressure chamber (10b),
in particular comprising a second on/off valve (42) arranged in the lubricant delivery circuit (13) and configured to decouple the high pressure chamber (10b) from the mixing unit (16) during the filling regime, and in particular comprising a third on/off valve (46) coupled to the low pressure chamber (10a) and configured to de-pressurize the low pressure chamber (10a) during the filling regime.

6. The device (300) as claimed in one of the claims 1 to 3, further comprising a lubricant cylinder (25) with a lubricant chamber (25b) configured to contain the lubricant and coupled to the mixing unit (16), wherein the pressure amplifier (10) is coupled to the lubricant cylinder (25) in order to increase the pressure of the lubricant.

7. The device (300) as claimed in claim 6, wherein the lubricant cylinder (25) further comprises a liquid chamber (25a) and a piston (25c),
wherein the liquid chamber (25a) is coupled to the pressure amplifier (10) and is configured to contain a liquid, and
wherein the piston (25c) separates the liquid chamber (25a) from the lubricant chamber (25b).

8. The device (300) as claimed in claim 7, wherein a first surface area (25d) of the piston (25c) that is in contact with the liquid chamber (25a) is equal to a second surface area (25e) of the piston (25c) that is in contact with the lubricant chamber (25b), and/or
wherein a lubricant mixing unit (27) is arranged in the lubricant chamber (25b).

9. The device (300) as claimed in one of the claims 6 to 8, wherein the high pressure chamber (10b) is coupled to the liquid chamber (25a).

10. The device (300) as claimed in claim 9, wherein the lubricant flow valve (14) is a liquid flow regulating flow valve (23) arranged between the pressure amplifier (10) and the lubricant cylinder (25).

11. A machine (200, 400, 600) comprising a device (100, 300, 500) for mixing a coolant and a lubricant as claimed in one of the preceding claims.

## Patentansprüche

1. Vorrichtung (100, 300, 500) zum Vermischen eines Kühlmittels mit einem Schmiermittel, wobei die Vorrichtung (100, 300, 500) umfasst:
einen Einlassanschluss (2) zum Aufnehmen des Kühlmittels,
einen Druckverstärker (10), der an den Einlassanschluss (2) gekoppelt ist und dazu ausgelegt ist, den Druck des Schmiermittels mittels des Drucks des Kühlmittels zu erhöhen;
eine Mischeinheit (16), die an den Einlassanschluss (2) und den Druckverstärker (10) gekoppelt ist und dazu ausgelegt ist, das Kühlmittel mit dem durch den Druckverstärker (10) bereitgestellten Schmiermittel zu vermischen;
wobei der Druckverstärker (10) eine Niederdruckkammer (10a), die an den Einlassanschluss (2) gekoppelt ist, und eine Hochdruckkammer (10b), die dazu ausgelegt ist, das Schmiermittel zu enthalten, und an die Mischeinheit (16) gekoppelt ist, und einen Kolben (10c), der in einem Zylinder enthalten ist, umfasst, wobei der Kolben (10c) die Niederdruckkammer (10a) von der Hochdruckkammer (10b) trennt;
ein Schmiermitteldurchflussventil (14), das zwischen dem Druckverstärker (10) und der Mischeinheit (16) angeordnet ist,
einen Hubsensor (12), der dazu ausgelegt ist, den Hub des Kolbens (10c) zu messen; und
eine Steuereinheit (21), die dazu ausgelegt ist, Daten über den Hub des Kolbens (10c) von dem Hubsensor (12) zu empfangen und das Schmiermitteldurchflussventil (14) unter Verwendung der Daten über den Hub des Kolbens (10c) zu steuern.

2. Vorrichtung (100, 300, 500) nach Anspruch 1, ferner umfassend eine Kühlmitteldurchflusstrenneinheit (5), wobei die Kühlmitteldurchflusstrenneinheit (5) einen Einlass, der an den Einlassanschluss (2) gekoppelt ist, einen ersten Auslass, der an die Mischeinheit (16) gekoppelt ist, und einen zweiten Auslass, der an den Druckverstärker (10) gekoppelt ist, umfasst.

3. Vorrichtung (100, 300, 500) nach Anspruch 2, ferner umfassend einen Kühlmitteldruckregler (8), der zwischen dem zweiten Auslass der Kühlmitteldurchflusstrenneinheit (5) und dem Druckverstärker (10) angeordnet ist, und/oder
ferner umfassend ein Kühlmitteldurchflussventil (15), das zwischen dem ersten Auslass der Kühlmitteldurchflusstrenneinheit (5) und der Mischeinheit (16) angeordnet ist.

4. Vorrichtung (100, 500) nach einem der Ansprüche 1 bis 3, wobei eine erste Oberfläche (10e) des Kolbens (10c), die mit der Niederdruckkammer (10a) in Kontakt steht, größer ist als eine zweite Oberfläche (10f) des Kolbens (10c), die mit der Hochdruckkammer (10b) in Kontakt steht.

5. Vorrichtung (500) nach einem der Ansprüche 1 bis 4, ferner umfassend einen Schmiermittelabgabekreislauf (13), der dazu ausgelegt ist, das Schmiermittel aus der Hochdruckkammer (10b) an die Mischeinheit (16) abzugeben,
ferner umfassend ein erstes Ein/Aus-Ventil (41), das an den Schmiermittelabgabekreislauf (13) gekoppelt ist und dazu ausgelegt ist, die Hochdruckkammer (10b) an eine Quelle (40) von Schmiermittel während eines Füllzustands zu koppeln, wenn Schmiermittel in die Hochdruckkammer (10b) gefüllt wird,
insbesondere umfassend ein zweites Ein/Aus-Ventil (42), das in dem Schmiermittelabgabekreislauf (13) angeordnet ist und dazu ausgelegt ist, die Hochdruckkammer (10b) von der Mischeinheit (16) während des Füllzustands zu entkoppeln, und
insbesondere umfassend ein drittes Ein/Aus-Ventil (46), das an die Niederdruckkammer (10a) gekoppelt ist und dazu ausgelegt ist, Druck aus der Niederdruckkammer (10a) während des Füllzustands abzulassen.

6. Vorrichtung (300) nach einem der Ansprüche 1 bis 3, ferner umfassend einen Schmiermittelzylinder (25) mit einer Schmiermittelkammer (25b), der dazu ausgelegt ist, das Schmiermittel zu enthalten, und der an die Mischeinheit (16) gekoppelt ist, wobei der Druckverstärker (10) an den Schmiermittelzylinder (25) gekoppelt ist, um den Druck des Schmiermittels zu erhöhen.

7. Vorrichtung (300) nach Anspruch 6, wobei der Schmiermittelzylinder (25) ferner eine Flüssigkeitskammer (25a) und einen Kolben (25c) umfasst,
wobei die Flüssigkeitskammer (25a) an den Druckverstärker (10) gekoppelt ist und dazu ausgelegt ist, eine Flüssigkeit zu enthalten, und
wobei der Kolben (25c) die Flüssigkeitskammer (25a) von der Schmiermittelkammer (25b) trennt.

8. Vorrichtung (300) nach Anspruch 7, wobei eine erste Oberfläche (25d) des Kolbens (25c), die mit der Flüssigkeitskammer (25a) in Kontakt steht, gleich einer zweiten Oberfläche (25e) des Kolbens (25c) ist, die mit der Schmiermittelkammer (25b) in Kontakt steht, und/oder
wobei eine Schmiermittelmischeinheit (27) in der Schmiermittelkammer (25b) angeordnet ist.

9. Vorrichtung (300) nach einem der Ansprüche 6 bis 8, wobei die Hochdruckkammer (10b) an die Flüssigkeitskammer (25a) gekoppelt ist.

10. Vorrichtung (300) nach Anspruch 9, wobei das Schmiermitteldurchflussventil (14) ein einen Flüssigkeitsdurchfluss regelndes Durchflussventil (23) ist, das zwischen dem Druckverstärker (10) und dem Schmiermittelzylinder (25) angeordnet ist.

11. Maschine (200, 400, 600), umfassend eine Vorrichtung (100, 300, 500) zum Vermischen eines Kühlmittels mit einem Schmiermittel nach einem der vorhergehenden Ansprüche.

## Revendications

1. Dispositif (100, 300, 500) pour mélanger un réfrigérant et un lubrifiant, le dispositif (100, 300, 500) comprenant :
un orifice d'entrée (2) pour recevoir le réfrigérant,
un amplificateur de pression (10) couplé à l'orifice d'entrée (2) et conçu pour augmenter la pression du lubrifiant au moyen de la pression du réfrigérant ;
une unité de mélange (16) couplée à l'orifice d'entrée (2) et à l'amplificateur de pression (10) et conçue pour mélanger le réfrigérant et le lubrifiant fournis par l'amplificateur de pression (10) ;
dans lequel ledit amplificateur de pression (10) comprend une chambre basse pression (10a) couplée à l'orifice d'entrée (2) et une chambre haute pression (10b) conçue pour contenir le lubrifiant et couplée à l'unité de mélange (16), et un piston (10c) contenu dans un cylindre, dans lequel le piston (10c) sépare la chambre basse pression (10a) de la chambre haute pression (10b) ;
une soupape de flux de lubrifiant (14) disposée entre l'amplificateur de pression (10) et l'unité de mélange (16),
un capteur de déplacement (12) conçu pour mesurer le déplacement du piston (10c) ; et
une unité de commande (21) conçue pour recevoir des données sur le déplacement du piston (10c) en provenance du capteur de déplacement (12) et pour commander la soupape de flux de lubrifiant (14) à l'aide des données sur le déplacement du piston (10c).

2. Dispositif (100, 300, 500) selon la revendication 1, comprenant en outre une unité de séparation de flux de réfrigérant (5), dans lequel l'unité de séparation de flux de réfrigérant (5) comprend une entrée couplée à l'orifice d'entrée (2), une première sortie couplée à l'unité de mélange (16) et une seconde sortie couplée à l'amplificateur de pression (10).

3. Dispositif (100, 300, 500) selon la revendication 2, comprenant en outre un régulateur de pression de réfrigérant (8) agencé entre la seconde sortie de l'unité de séparation de flux de réfrigérant (5) et l'amplificateur de pression (10), et/ou
comprenant en outre une soupape de flux de réfrigérant (15) agencée entre la première sortie de l'unité de séparation de flux de réfrigérant (5) et l'unité de mélange (16).

4. Dispositif (100, 500) selon l'une des revendications 1 à 3, dans lequel une première surface (10e) du piston (10c) qui est en contact avec la chambre basse pression (10a) est plus grande qu'une seconde surface (10f) du piston (10c) qui est en contact avec la chambre haute pression (10b).

5. Dispositif (500) selon l'une des revendications 1 à 4, comprenant en outre un circuit de distribution de lubrifiant (13) conçu pour délivrer le lubrifiant de la chambre haute pression (10b) à l'unité de mélange (16), comprenant en outre une première soupape marche/arrêt (41) couplée au circuit de distribution de lubrifiant (13) et conçue pour coupler la chambre haute pression (10b) à une source (40) de lubrifiant pendant un régime de remplissage lorsque le lubrifiant est rempli dans la chambre haute pression (10b),
comprenant en particulier une deuxième soupape marche/arrêt (42) agencée dans le circuit de distribution de lubrifiant (13) et conçue pour découpler la chambre haute pression (10b) de l'unité de mélange (16) pendant le régime de remplissage, et comprenant en particulier une troisième soupape marche/arrêt (46) couplée à la chambre basse pression (10a) et conçue pour dépressuriser la chambre basse pression (10a) pendant le régime de remplissage.

6. Dispositif (300) selon l'une des revendications 1 à 3, comprenant en outre un cylindre de lubrifiant (25) avec une chambre de lubrifiant (25b) conçue pour contenir le lubrifiant et couplée à l'unité de mélange (16), dans lequel l'amplificateur de pression (10) est couplé au cylindre de lubrifiant (25) afin d'augmenter la pression du lubrifiant.

7. Dispositif (300) selon la revendication 6,
dans lequel le cylindre de lubrifiant (25) comprend en outre une chambre de liquide (25a) et un piston (25c), dans lequel la chambre de liquide (25a) est couplée à l'amplificateur de pression (10) et est conçue pour contenir un liquide, et
dans lequel le piston (25c) sépare la chambre de liquide (25a) de la chambre de lubrifiant (25b).

8. Dispositif (300) selon la revendication 7,
dans lequel une première surface (25d) du piston (25c) qui est en contact avec la chambre de liquide (25a) est égale à une seconde surface (25e) du piston (25c) qui est en contact avec la chambre de lubrifiant (25b), et/ou
dans lequel une unité de mélange de lubrifiant (27) est agencée dans la chambre de lubrifiant (25b).

9. Dispositif (300) selon l'une des revendications 6 à 8,
dans lequel la chambre haute pression (10b) est couplée à la chambre de liquide (25a).

10. Dispositif (300) selon la revendication 9,
dans lequel la soupape de flux de lubrifiant (14) est une soupape de flux de régulation de flux de liquide (23) agencée entre l'amplificateur de pression (10) et le cylindre de lubrifiant (25).

11. Machine (200, 400, 600) comprenant un dispositif (100, 300, 500) pour mélanger un réfrigérant et un lubrifiant selon l'une des revendications précédentes.
